# EUROPEAN PATENT APPLICATION

(11) **EP 1 666 246 A1**
(43) Date of publication of application: **07.06.2006**
(21) Application number: 03818389.3
(22) Date of filing: 03.09.2003
(51) Int. Cl.: B32B 37/00

(54) **AUTOMATIC INSTALLATION WHICH IS USED TO FORM LAMINATED PRODUCTS**

(71) Applicant: Grupo Antolin Ingenieria, S.A., 09007 Burgos (ES)
(72) Inventor: GRANDE, Miguel, Angel, E-09195 Arcos de la Llana (Burgos) (ES); ARIZNAVARRETA, Anselmo, E-09190 Villatoro (Burgos) (ES)
(74) Representative: Esteban Perez-Serrano, Maria Isabel
(86) International application number: PCT/ES2003/000445
(87) International publication number: WO 2005/021261

(57) **Abstract**

An installation for forming layered products, each one composed of a laminar assembly (1) formed by at least one front laminar element (1a), one intermediate laminar element (1b) and one rear laminar element (1c) . The installation includes a workbench (4), positioning units (5, 6) and applicator units (3) disposed in a single station (8) for production of the laminar assembly (1), in which remain immobilised at least the rear and intermediate laminar elements (1c, 1b) until at least one laminar element (1, 1') is formed. The applicator units (3) are disposed and travel on a plane above the workbench (4) of the station (8) for production of the laminar assembly (1, 1'), so that the area of action of the first applicator means (3) covers the area of the workbench (4) on which the laminar elements (1c, 1b, 1a) are successively superimposed.

## Description

### TECHNICAL FIELD OF THE INVENTION

The present invention belongs to the field of installations used to manufacture layered items comprising chopped fibre reinforcement layers, and particularly sandwich type items in which at least one layer comprises said fibres as a reinforcement material. Thus, the invention is especially useful in manufacturing processes for sandwich type items as those of automobile body trims, such as roof linings from vehicles, panels for lining door interiors and other internal areas of automobile bodies, trays, dashboards, thermal and/or sound insulation plates and panels in general.

### PRIOR STATE OF THE ART

Several types of chopped fibres are used nowadays in many products as reinforcement material. Among such products are those composed on a number of layers and/or sheets, of which at least one comprises reinforcement chopped fibres.

Spanish patent application ES-A-2157725 describes a procedure and installation for manufacturing elements for the automobile and/or construction industries. These are sandwich type elements comprising reinforcement fibre layers applied to both sides of a rigid polyurethane foam plate provided with adhesive, also comprising coating sheets applied on the corresponding sides having the adhesive and the chopped glass fibres.

The installation described in Spanish patent application ES-A-2157725 comprises several stations in which a laminar assembly is successively completed. Thus, said installation comprises a feeder for polyurethane sheets which constitute the intermediate laminar elements of the laminar assembly, an adhesive roller machine used to apply adhesive on both sides of the polyurethane sheets, a conveyor belt, an applicator for applying a reaction quickener (a catalyst), a reinforcement fibre cutter, a fibre agglomerant applicator, a sandwich maker where the front and rear laminar coating elements are applied and a thermoforming press. In practice, this installation constitues a manufacturing line where in a first station the chopped fibreglass is placed on the rear laminar element. Then in the sandwich formation station the central polyurethane sheet with its adhered fibre layer is superimposed on the rear laminar element, also provided with fibre. In the following station the front laminar element(s) is(are) superimposed on the subassembly formed by the central sheet and the rear laminar element with their corresponding fibre layers and the laminar assembly thus formed is introduced in the forming press.

These conventional manufacturing lines present several drawbacks derived from the need to carry the laminar elements from one station to another. This operation implies an excessive number of movements and unproductive time, as well as the need to use additional parts for transportation such as cardboard (used to increase the supporting capacity of the laminar elmenets) which implies an increased cost.

In addition, said conventional lines require a great space for housing the various stations involved in the laminar assembly production process.

On another hand, transportation between stations implies a great waste of fibre, which in adition to implying an economic cost leads to numerous cleanliness problems -as the cut fibres that are not used are scattered throughout the installation-, premature malfunctions of the machines and ancillary equipment of the line, which are exposed to the waste fibre, and health risks for operators exposed to said fibres.

Furthermore, the loss of in the laminar elements during the transportation means that it is not possible to calculate accuately the amount of fibre reaching the laminar elements, which can cause local variations in the distribution of the reinforcement fibres, and even deficient reinforcements.

European Patent application EP-A-0437787 describes layered products useful for manufacturing roof linings and trays for atomobiles, manufactured in a manner fundamentally analogous to that disclosed by Spanish patent application ES-A-2157725, except that the glass fibre layer is not applied with a cutter but in the form of a non-woven sheet of chopped fibreglass.

These fibreglass sheets have the disadvantage of requiring preformed dimensions and shapes, so that in order to manufacture items of different sizes it is necessary to have a stock of several types, or to cut the excess material from the fibreglass sheet.

This invention intends to overcome the drawbacks of the state of the art described above, for which purpose the object of the present invention is to provide an installation for forming layered products requiring a only a small number of transportation and handling operations, which prevents as much as possible waste of fibreglass, and also allows a suitable control of the amount of chopped fibre applied to the laminar elements, without requiring preformed fibre sheets.

Further objects of the invention may be inferred from the description of the invention.

### DESCRIPTION OF THE INVENTION

The present invention intends to obtain the aforementioned objects with an installation for forming layered products composed each of a laminar assembly formed by at least a front laminar element, an intermediate laminar element and a rear laminar element, and at least a first layer of reinforcement chopped fibres, applicable in processes mainly consisting of two stages: a production stage of the laminar assembly by superimposing the various component layers; and a press formation stage of the resulting laminar assembly to produce the layered product in its final form.

According to the invention, the installation comprises:
- first applicator means for applying the chopped fibres on at least one of said laminar elements;
- first positioning means for positioning the rear laminar element on the workbench such that the top face of the rear laminar element is positioned at an area of action of the first applicator means; and
- second positioning means for superimposing the intermediate laminar element on said rear laminar element, and third positioning means for superimposing the front laminar element on said intermediate laminar element.

With the elements listed above, the installation of the present invention attains the aforementioned objectives because:
- the workbench, at least the first positioning means and the first applicator means are disposed in a single station for production of the laminar assembly, in which the laminar elements are immobilised until the laminar assembly or laminar subassembly is formed; and
- the first applicator means are disposed and move on a plane above the workbench of the station for production of the laminar assembly, such that the area of action of the first applicator means covers the area of the workbench on which the laminar elements are successively superimposed.

This installation allows forming the laminar assembly or sandwich in a single station, without the laminar elements or formats having to move or be in motion when they are being provided or are already provided with the layers of reinforcement chopped fibres before it is sent to the forming station. In this way, the installation of the present invention allows minimising the fibreglass scattering and the problems inherent to such scattering, saving space in the manufacturing plant, reducing the manufacturing time and considerably simplifying the process for producing the laminar assemblies that constitute the base of the layered products.

According to the invention, the installation can be provided with first feeding means for introducing the aforementioned rear laminar element in the station for production of the laminar assembly, and/or second feeding means for introducing the intermediate laminar element, previously impregnated on both sides with an adhesive, in said station for production of the laminar assembly, and/or third feeding means for introducing the front laminar element in the station for production of the laminar assembly, in which case the third positioning means will be disposed on the station for production of the laminar assembly.

In one embodiment of the invention the installation also comprises cutting means for cutting out the front laminar elements (formats) (e.g. the exposed faces) and/or the rear laminar elements (e.g. the concealed faces) from sheets in the working format and dimensions before they are positioned on the workbench of said station for production of the laminar assembly.

Preferably, the station for production of the laminar assembly also comprises second applicator means for application of additional products on at least one of said laminar element. These products can be, for example, non-structural binders, catalysts, adhesives and other additives conventional *per se*.

Particularly when the installation is provided with said second feeding means, it can also be conveniently provided with a gluing system, such as a roller-based gluing system, through which pass the intermediate laminar elements before they are sent to the second positioning means.

In a preferred embodiment of the invention, the installation also comprises a forming station with a forming press, an extraction system to extract from the station for production of the laminar assembly the laminar subassembly formed by the rear and intermediate laminar elements and at least one layer of reinforcement fibres, and a feeding system for introducing and positioning said laminar subassembly in the forming station. In this embodiment, the third positioning means introduce the front laminar element in the forming station and position said front laminar element on said subassembly in the forming station in order to proceed to the formation of the layered product.

The means for applying and distributing the reinforcement fibres and/or applying other additional products may be disposed in a frame free to travel above the workbench by the action of a conventional displacement system. To control the frame displacement, as well as the amount of fibre or other materials added in each stage of the process, the installation may also be provided with corresponding control means.

To apply the fibres, a linear displacement robot may be used as a system to carry the applicator means of the reinforcement chopped fibres and/or the second applicator means. In this way, the robot bearing the applicators moves, not the laminar elements, which also allows a greater control of the production process and reduces cycle times. The chopped fibreglass applicator means may be, for example, applicator guns or alternative cutting systems.

The installation of the invention may also comprise an evacuation system to remove the laminar element from the station. In turn, the laminar element evacuation system may also comprise means for introducing and positioning said laminar element in the forming press. The laminar element evacuation system can also comprise means for introducing and positioning the laminar element in a peripheral sealing device in order to seal at least in part the perimeter of the laminar assembly, by applying heat and pressure to the laminar assembly. The peripheral sealing prior to the forming operation is meant to prevent the loss of fibreglass near the edge when the laminar assembly or subassembly is handled before its final formation.

To perform said peripheral sealing the installation may also be provided with a second sealing device. In this embodiment, the second sealing device and the first sealing device are disposed to seal the perimeter of laminar elements with substantially rectangular outlines, such that the first sealing device is adapted to make a first partial sealing pass over the areas adjacent to the first two opposite sides of the perimeter of the laminar assembly, while the second sealing device is adapted to make a second partial sealing pass over the areas adjacent to two second opposite sides of said laminar assembly or subassembly.

In this embodiment, the installation can also be equipped with a transportation system to carry the laminar assembly or subassembly to the second sealing device, so that it collects the laminar assembly from the first sealing device after the first sealing pass, and using a translation and rotation movement will place said laminar assembly or subassembly on the second sealing device, so that the laminar assembly is left in a position where, after the second peripheral sealing pass is performed, a straight translation will leave it ready to be introduced and positioned in the forming press.

In another embodiment of the invention a peripheral sealing may be performed in the laminar assembly production station by the action of applicators placed on a linear displacement robot, which deposit a non-structural binder on said laminar subassembly at its peripheral areas, preventing the reinforcement fibre from falling during the handling operations meant to carry it from the laminar assembly production station to the forming press.

In another preferred embodiment, deflectors may be coupled to the workbench distributed along its entire length so that the various layers forming the laminar assembly are confined between said deflectors in the fibre application stage, thereby preventing the fibre from falling out of the limits defined by said deflectors.

It may be inferred from all of the above that the installation of the present invention achieves the previously defined objectives in an efficient, simple and economic manner.

### BRIEF DESCRIPTION OF THE FIGURES

Some of the embodiments of the invention will be described below with reference to the figures, where:
Figure 1 is a schematic representation of a laminar assembly of the type that can be produced by the installation of the present invention;
Figure 2 is a schematic plan view of an embodiment of the present invention;
Figure 3 is a cross section view along the B-B' line shown in figure 2, where the rear laminar element is being introduced in the workbench;
Figure 4 is a view analogous to that of figure 3, in which the rear laminar element is already positioned on the workbench and is being subjected to the action of the applicators;
Figure 5 shows another embodiment of an installation according to the present invention;
Figure 6 shows detailed views of an embodiment of the first sealing device shown in figure 5;
Figure 7 is a schematic view of an embodiment of the control system of the installation of the invention.

The numerical references used in these figures identify the following elmenets:
1 laminar assembly
1' laminar subassembly
1a front laminar element
1a' front sheet
1b intermediate laminar element
1c rear laminar element
1c' rear sheet
1d first chopped fibre layer
1e second chopped fibre layer
2 chopped fibreglass
3 firs applicator means
4 workbench
5 first positioning means
6 second positioning means
7 third positioning means
8 production station
9 cutting means
10 first feeding means
11 second feeding means
12 gluing system
13 third feeding means
14 forming station
15 forming press
16 extraction system
17 feeding system
18 evacuation system
19 means for introducing and positioning the laminar assembly in the forming station
20 first sealing device
20a first sealing elements
21 means for introducing the laminar assembly in the sealing device
22 second sealing device
22a second sealing elements
23 transportation system
24 second applicators
25 frame
25a applicator carrier of the frame
25b moving crossbar
25c transverse beams
26 displacement system
27 control means
28 deflectors
29 fixed posts
30 vertical beams
31 lower posts
32 actuation system for the first positioning means

### EMBODIMENTS OF THE INVENTION

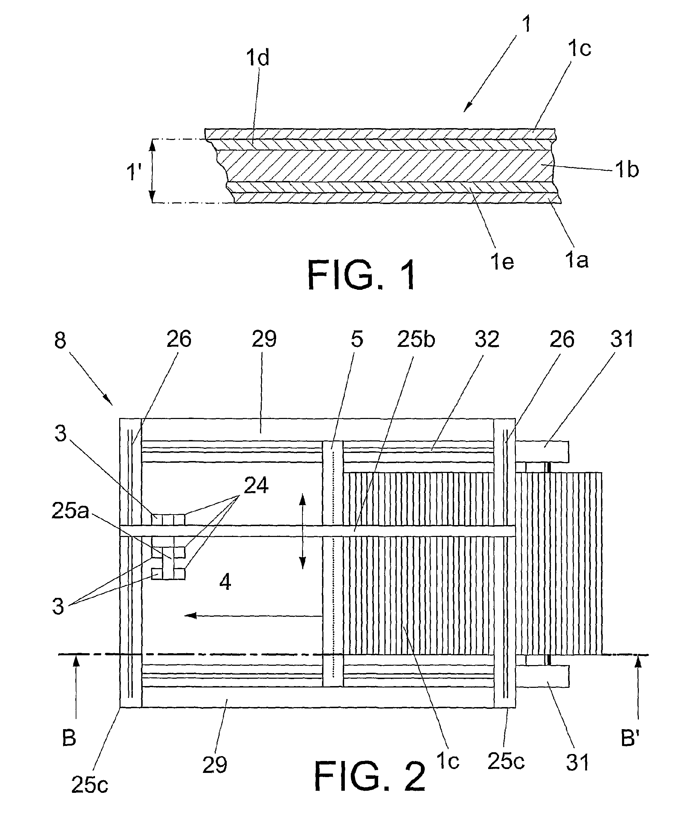

Figure 1 represents schematically a laminar assembly 1 of the type that can be produced with the installation of the present invention. It can be seen that this laminar assembly 1 is of the type described, for example, in Spanish patent application ES-A-2157725, comprising a rear laminar element or format 1c (corresponding, for example, to what will be the concealed face of an automobile roof lining), an intermediate laminar element or format 1b (corresponding, for example, to a polyurethane sheet that constitutes the lining core) and a front laminar element or format 1a (corresponding, for example, to what will be the exposed face of the lining). Between the rear format 1c and the intermediate format 1b, as well as between the front format 1a and said intermediate format 1b, are corresponding layers 1d, 1e of reinforcement chopped fibreglass. As the intermediate format is superficially impregnated with an adhesive, the fibres on both sides of the intermediate format are immersed in said adhesive, so that the front format 1a and rear format 1c are glued to the intermediate format 1b. It also shows that the rear format 1c, the intermediate format 1b and the corresponding fibre layers 1d and 1e form what can be defined as a subassembly 1'.

Figures 2, 3 and 4 schematically represent the arrangement and interrelation of the various elements forming part of a laminar product production station 8, according to an embodiment of this application.

Thus, figure 2 shows how the laminar product production station 8 has a structure comprising a workbench 4, four vertical support beams 30 on which are two fixed crossbars 29, one on each side of the station 8, and two transverse beams 25c, one on each end carriage of the station 8.

The beams 25c are provided with a displacement system 26 that allows a transverse displacement of the mobile crossbar 25b on said beams. In turn, the mobile crossbar 25b is provided with a displacement system 26 to which is coupled an applicator-carrying part 25a which, by the activation of the displacement system 26 on the crossbar 25b, allows a longitudinal displacement of the applicator means 3 for the chopped fibres and the applicators means 24 for the additional products. It can therefore be seen that the displacement system 26 allows the applicator means 3, 24 to move in a plane above the workbench 4.

The lower part of the workstation 8 has two lower crossbars 31 respectively placed at each side of the workbench 4. the lower crossbars 31 are provided with an actuation system 32 that allows displacing the first positioning means 5 to which the rear format 1c is attached, so that the positioning means will carry the format 1c above the workbench 4 to the end resting position of the format. In the latter position the applicator means 3, 24 respectively begin to drop chopped fibres 2 and additional products, such as a catalyst, a binder, and adhesive, etc. on the top surface of the rear format 1c placed on the workbench 4. Obviously, the first positioning means 5 may deposit in the following working cycle other formats above the format(s) resting on the workbench 4.

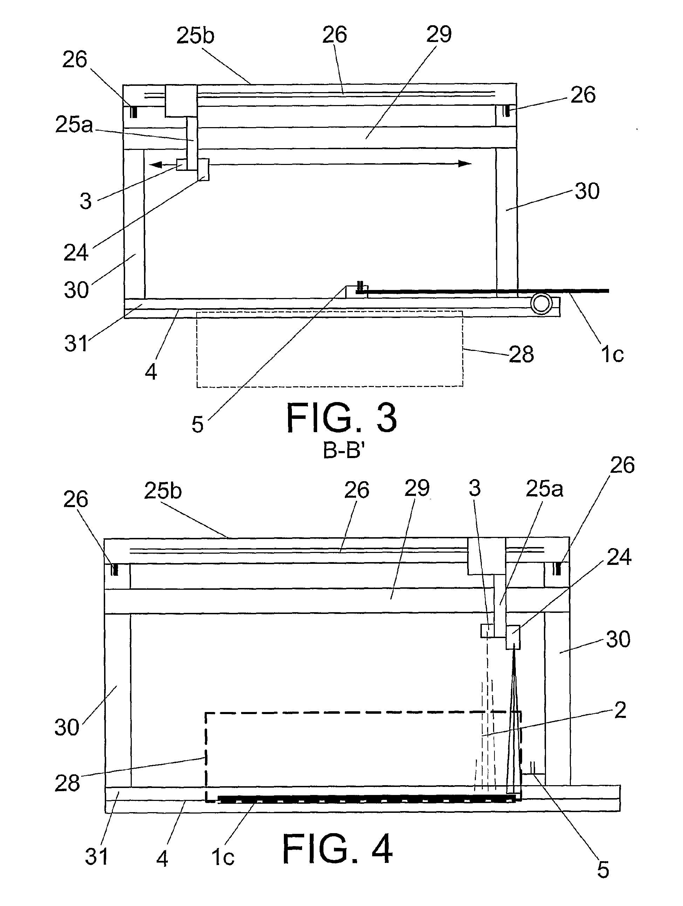

Figures 3 and 4 also show deflector elements 28 which, in the stages in which the fibres are deposited on the various formats, rise about the formats to define a box that prevents the fibres from falling out of the workbench. Before and after the fibres 2 are deposited, the deflector elements are removed in order to allow the formats to enter/exit the production station 8.

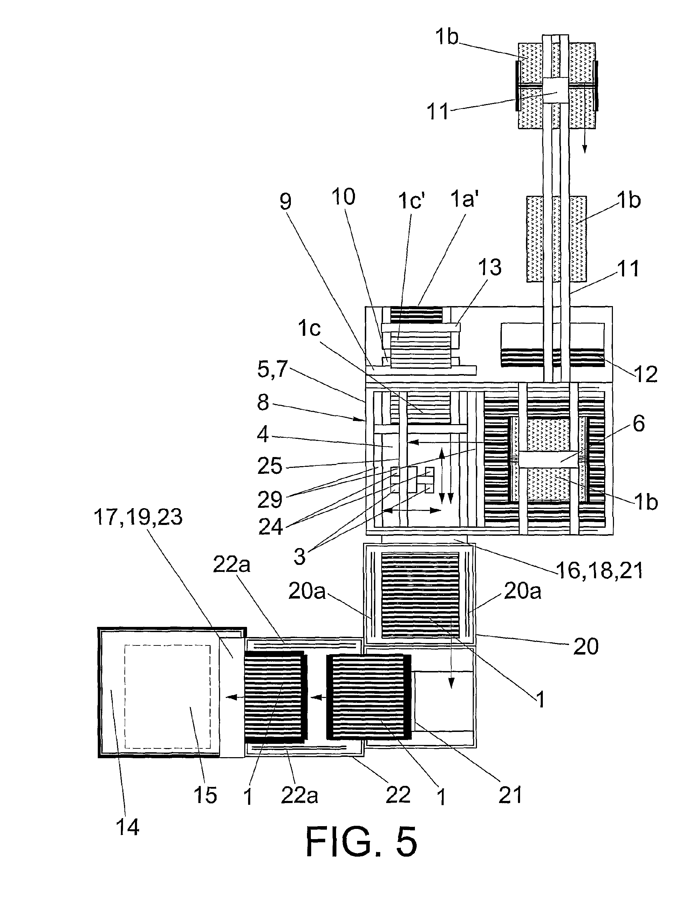

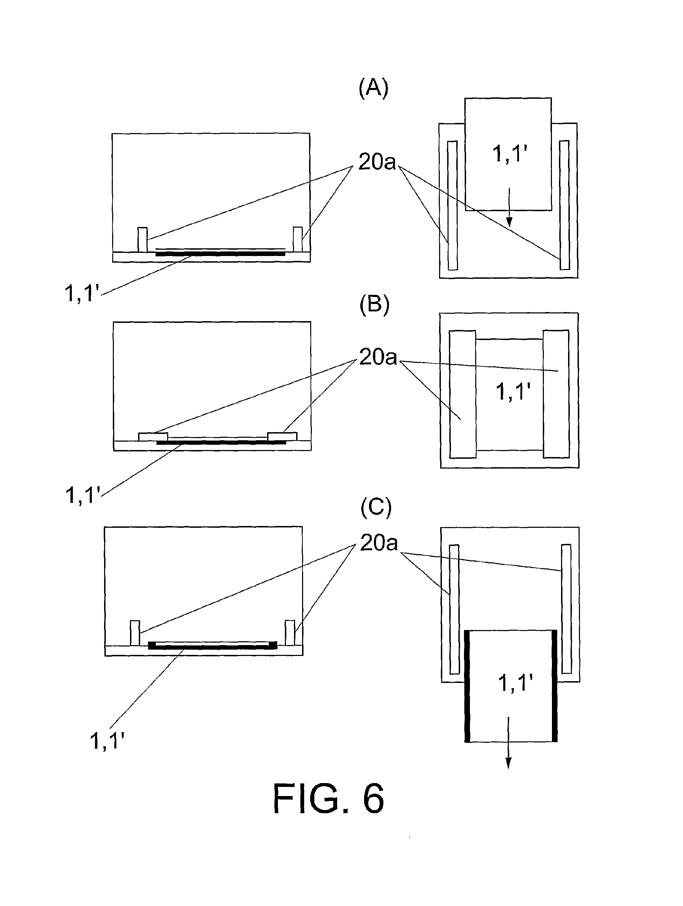

Figures 5 and 6 illustrate schematically the arrangement and interrelation of another embodiment for the installation of the present invention.

As shown in figure 5, in this embodiment the production station 8 is the point of confluence for the laminar elements to form the laminar assembly 1 or the laminar subassembly 1' before the layered product is formed in the forming press 15 of the forming station 14.

Thus, the installation comprises first feeding means 10 for the rear formats 1c and cutting means 9 that cut the rear formats 1c from a rear sheet 1c' wound on a spool. After the cutting means 9, the rear format is carried by the first positioning means 5, thereby introducing the rear format 1c in the laminar assembly production station 8, whose installation has the same structure and functionality as that described in figures 2 to 4.

The installation also comprises second feeding means 11 that supply the intermediate laminar elements or formats 1b to the second positioning means 6, passing through a conventional gluing system 12, such as a system comprising gluing rollers. In the embodiment shown in figure 5, there are two stacks of intermediate formats 1b whose size and/or shape may be different, and the second feeding means 11 can carry the intermediate formats 1b from one of the two stacks corresponding to the type of intermediate format 1b required to form the layered product to be manufactured. After passing through the gluing system 12, the intermediate formats 1b provided with adhesive layers on both sides are collected by the second positioning means 6. The second feeding means 11 and the second positioning means 6 are themselves conventional devices for handling laminar elements.

The second positioning means 6 introduces the glued intermediate format 6 in the laminar assembly production station 8 and deposits it on the rear element 1c, on whose upper face is deposited the first layer 1d of chopped fibreglass 2, and then returns to its initial position to collect the next intermediate format 1b.

When the intermediate format 1b is located above the rear format 1c, the first applicator means 3, eventually aided by the second applicator means 24, deposit the second glass fibre layer 2 on the top face of the intermediate format 1b, being adhered to it by the action of the adhesive previously applied on the two faces of the intermediate format.

The cutting means 9 also cut the front formats 1a from a front sheet 1a' wound about a spool. From the cutting means 9, the front format 1a is carried by the second positioning means 7 which thereby introduce the front format 1a in the production station 8 and deposit the front format 1a on the subassembly 1' formed by the rear format 1c, the first fibre layer 1d, the intermediate format 1b and the second fibre layer shown in figure 1, to form the laminar assembly 1, which is extracted from the station 8 by the extraction means 16 and introduced by the means 21 in the first sealing device 20, where the areas adjacent to two of the peripheral sides of the laminar element 1 are sealed peripherally, and then in the second sealing device 22 where the areas adjacent to the other two peripheral sides of said assembly 1 are sealed. In this way, the laminar assembly 1 is sealed on its entire perimeter before, by action of the transportation system 23 comprising a feeding system 17 and/or means 19 for introducing the laminar assembly 1 in the sealing device 14 where the layered product is formed in the forming press 15.

In another embodiment (not shown in the figures) alternative to that shown in figure 5, the front formats 1a are superimposed on the laminar subassembly 1' after the subassembly 1' has been introduced in the forming station 14, such that the third positioning means 7 are not disposed on the station 8 but instead are near the forming station, so that these third positioning means 7 can place the front formats 1a on the aforementioned subassembly 1' after it is positioned in the forming press.

In another embodiment, the peripheral sealing of the subassembly 1' can be performed at the laminar assembly production station 8 by the action of the second applicator means 24, which deposit a non-structural binder on the perimeter of the laminar subassembly 1', preventing the reinforcement fibre from falling during the handling operations when it is carried from the laminar assembly production station 8 to the forming press.

Figure 6 illustrates schematically the manner in which the peripheral sealing can be performed in the first sealing station 20. It can be seen how, after the laminar assembly 1 has been introduced in the station 20, the first sealing elements 20a, consisting of plates (optionally heated), press on the areas adjacent to two of the peripheral edges of the assembly 1 and thereby seal said edges to prevent the fibre from falling.

The areas adjacent to the other two sides area sealed by the second sealing device 22 in an analogous manner by the second sealing elements 22a.

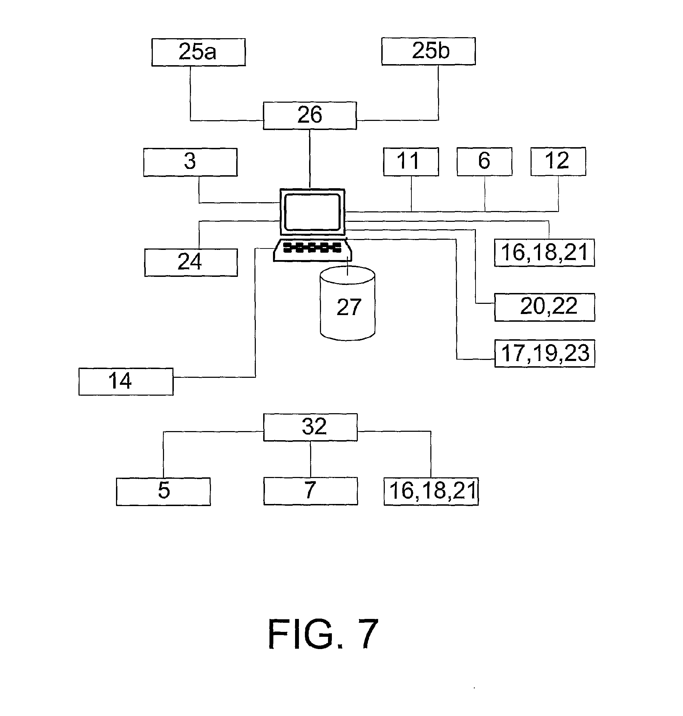

Figure 7 shows a schematic representation of the manner in which the control means 27 control various elements of the installation shown in figure 5.

The control means 27 are in this case a computer with programs allowing to operate the installation according to the parameters of the layered product to be obtained. This, the program will include operation parameter that allow the coordination and synchronisation of the following functions, among others:
- the speed of supply of the rear formats 1c by controlling the first feeding means 1c;
- the amount of chopped fibres 2 to be deposited by controlling the first applicator means 3 and/or the speed of the displacement system 26 that acts on the frame 25;
- the distribution of the chopped fibres deposited, by controlling the displacement system 26 that acts on the frame 25;
- the characteristics of the fibre layers 1d and 1e by controlling the second applicator means 24;
- the selection of the type of intermediate format 1b by controlling the second feeding means 11;
- the size of the rear formats 1c and the front formats 1d by controlling the first/third feeding means 10, 13 and the cutting device 9;
- the type and extent of sealing of the laminar assembly 1, by controlling the first and second sealing devices 20, 22;
- the extent and characteristics of the compression of the laminar assembly, by controlling the pressure, temperature and/or duration of the compression exerted in the forming station;
- the synchronisation of all the processes performed in the installation.

The above description shows that the installation of the present invention allows to achieve the objectives stated further above.

## Claims

1. An installation for forming layered products, each one composed of a laminar assembly (1) formed by at least one front laminar element (1a), one intermediate laminar element (1b) and one rear laminar element (1c), and at least a first layer (1d, 1e) of reinforcement chopped fibres (2), applicable in processes that fundamentally involve two stages, one for producing the laminar assembly (1) by superimposing the various layers (1a, 1b, 1c, 1d, 1e) that comprise it, and the other for forming in a press (15) the resulting laminar assembly (1) to obtain the layered product in its final form, the installation comprising:
first applicator means (3) for applying the chopped fibres (2) on at least one of said laminar elements (1a, 1b, 1c);
a workbench (4);
first positioning means (5) for positioning the rear laminar element (1c) on the workbench (4), so that the top face of the rear laminar element (1c) is placed in an area of action of the first applicator means (3);
second positioning means (6) for superimposing the intermediate laminar element (1b) on said rear laminar element (1c);
third positioning means (7) for superimposing the front laminar element (1a) on said intermediate laminar element (1b);
**characterised in that**
said workbench (4), at least said positioning means (5, 6) and said first applicator means (3) are disposed on a single station (8) for production of the laminar assembly (1), where at least the rear and intermediate laminar elements (1c, 1b) are immobilised until at least one laminar assembly (1, 1') is formed,
said first applicator means (3) are disposed and move on a plane above the aforementioned workbench (4) of the station (8) for production of the laminar assembly (1, 1') such that the area of action of said first applicator means (3) covers the area of said workbench (4) on which the aforementioned laminar elements (1c, 1b, 1a) are successively placed and superimposed on each other.

2. An installation according to claim 1, **characterised in that** it also comprises cutting means (9) for cutting the fronts laminar elements (1a) and/or the rear laminar elements (1c) from sheets (1a', 1c') in the working format and dimensions before they are placed on the workbench (4) of said station (8) for production of the laminar assembly (1, 1').

3. An installation according to claim 1, **characterised in that** it comprises first feeding means (10) for introducing said rear laminar element (1c) in the station (8) for production of the laminar assembly (1, 1').

4. An installation according to claim 1, **characterised in that** it comprises second feeding means (11) for introducing the intermediate laminar element (1b), previously impregnated on both sides with adhesive, in said station (8) for production of the laminar assembly (1, 1').

5. An installation according to claim 1 or 4, **characterised in that** it comprises a gluing system (12) through which pass the intermediate laminar elements (1b) before they are delivered to the second positioning means (6).

6. An installation according to claim 1, **characterised in that** the third positioning means (7) are disposed on the station (8) for production of the laminar assembly (1) and **in that** the installation comprises third feeding means (13) for introducing the front laminar element (1a) in the station (8) for production of the laminar assembly (1).

7. An installation according to claim 1, **characterised in that** it also comprises:
- a forming station (14) with a forming press (15);
- an extraction system (16) for extracting, from the station (8) for production of the laminar assembly (1'), the subassembly (1') composed of the rear (1c) and intermediate (1b) laminar elements and at least one layer (1d, 1e) of reinforcement fibres (2); and
- a feeding system (17) for introducing and positioning said laminar subassembly (1') inside the forming station (14);
and **in that** the third positioning means (7) introduce the front laminar element (1a) in the forming station (14) and position said front laminar element (1a) on said subassembly (1') located in the forming station (14), to then proceed to the formation of the layered product.

8. An installation according to claim 1, **characterised in that** the station (8) for production of the laminar assembly (1, 1') also comprises an evacuation system (18) for removing said laminar assembly (1,1') from said station (8).

9. An installation according to claim 8, **characterised in that** the evacuation system (18) for the laminar assembly (1, 1') also comprises means (19) for introducing and positioning said laminar assembly in the forming press (15).

10. An installation according to claim 1, **characterised in that** it also comprises at least one first peripheral sealing device (20) for sealing at least part of the perimeter f the laminar assembly (1, 1') applying heat and pressure to the laminar assembly (1, 1').

11. An installation according to either of claims 8 and 10, **characterised in that** the evacuation system (18) of the laminar assembly (1, 1') also comprises means (21) for introducing and positioning the laminar assembly (1, 1') in said peripheral sealing device (20).

12. An installation according to claim 10, **characterised in that** it also comprises a second sealing device (22), said second sealing device (22) and said first sealing device (20) being disposed to seal the perimeter of a laminar assembly (1, 1') with a substantially rectangular outline,
and **in that** the first sealing device (20) is adapted to perform a first partial sealing step on the areas adjacent to two first opposite sides of the perimeter of the laminar assembly (1, 1'), while the second sealing device (22) is adapted to perform a second partial sealing step on the areas adjacent to two second opposite sides of said laminar assembly (1, 1').

13. An installation according to claim 12, **characterised in that** it comprises a transportation system (23) for carrying the laminar assembly (1, 1') to the second sealing device (22) such that it collects the laminar assembly (1, 1') from the first sealing device (20) after the first sealing step and by means of a translation and rotation positions said laminar assembly (1, 1') in the second sealing device (22), such that the laminar assembly (1, 1') is left in a position where, after the second peripheral sealing step is performed, a translation along a straight line leaves it ready to be introduced and positioned in the forming press (15).

14. An installation according to claim 1, **characterised in that** the laminar assembly (1, 1') production station also comprises second applicator means (24) for applying additional products on at least one of said laminar elements (1, 1').

15. An installation according to claim 14, **characterised in that** at least one of the additional elements applied consists of a non-structural binder applied on the perimeter of the subassembly (1') formed by the rear (1c) and intermediate (1b) laminar elements, and on at least one layer of reinforcement fibres.

16. An installation according to claim 1 or 14, **characterised in that** the first applicator means (3) for applying and distributing the reinforcement fibres (2) and/or for applying additional products are disposed on a frame (25) that can travel above the workbench by the action of a displacement system (26).

17. An installation according to claim 16, **characterised in that** it comprises control means (27) for controlling the displacement of the frame (25), as well as the amount of fibre (2) or other materials added in each stage of the process.

18. An installation according to claim 1, **characterised in that** it also comprises deflector elements (14) coupled to the workbench (4) of the forming station (14) of the layered product, distributed along its entire perimeter, so that the various layers (1a, 1b, 1c, 1d, 1e) that form the laminar assembly (1, 1') are confined between said deflectors (28) during the fibre (2) application stage, thereby preventing said fibre (2) from falling out of the limits defined by said deflector elements (28).
